# EUROPÄISCHE PATENTSCHRIFT

(11) **EP 0 784 037 B1**
(45) Veröffentlichungstag und Bekanntmachung des Hinweises auf die Patenterteilung: **15.07.1998**
(21) Anmeldenummer: 97100113.6
(22) Anmeldetag: 07.01.1997
(51) Int. Cl.: C04B 33/13

(54) **Verfahren zum Herstellen von Ziegelformkörpern**
Process for producing bricks
Procédé de fabrication de briques

(30) Priorität: 13.01.1996 DE 19601131; 29.01.1996 DE 19602883
(43) Veröffentlichungstag der Anmeldung: 16.07.1997
(73) Patentinhaber: ProMineral Gesellschaft zur Verwendung von Mineralstoffen mbH, 50129 Bergheim (DE); SICOWA Verfahrenstechnik für Baustoffe GmbH & Co. KG, D-52072 Aachen (DE)
(72) Erfinder: Deubener, Joachim, Dr., 13357 Berlin (DE); Schäfer, Christof, Dr., 50354 Hürth (DE)
(74) Vertreter: Sparing - Röhl - Henseler Patentanwälte

(56) Entgegenhaltungen:
- EP-A- 0 479 411
- EP-A- 0 545 163
- DE-C- 4 139 644
- GB-A- 2 061 241

## Beschreibung

Die Erfindung betrifft ein Verfahren zum Herstellen von Ziegelformkörpern nach dem Oberbegriff des Anspruchs 1.

Aus der DE 41 39 642 A1 ist ein Verfahren zum Herstellen von Ziegelformkörpern bekannt, bei dem eine körniges, tonhaltiges Material, Magerungsmittel und Wasser enthaltende Preßmasse hergestellt wird, wobei eine Fraktion einer Braunkohlenflugasche mit einer maximalen Teilchengröße bis etwa 500 µm verwendet und eine erdfeuchte Preßmasse erzeugt wird, die bei Drücken in der Größenordnung von 15 bis 20 N/mm² zu individuellen, eigenstabilen Rohlingen, insbesondere auf einer Kalksandsteinpresse, verpreßt wird, die getrocknet und gebrannt werden. Die Preßmasse kann hierbei auch bis zu 10 Masse-% Ton enthalten. Hierbei ergeben sich eine relativ geringe Trocknungsschwindung ebenso wie eine relativ geringe Brennschwindung (im Vergleich zu Ziegelformkörpern, die aus Lagerstätten stammendem Ton durch Naßpressen hergestellt werden und bei denen eine Trocknungsschwindung von etwa 4 bis 10% und zusätzlich eine Brennschwindung etwa von 2 bis 7% auftritt). Allerdings sind diese relativ geringen Schwindwerte für eine Plansteinqualität nicht ausreichend. Plansteinqualität bedeutet, daß Abweichungen von höchstens ± 1 mm in der Höhe, ± 1,5 mm in der Länge und ± 1,5 mm in der Breite in den Kantenlängen auftreten, so daß die Steine zur Herstellung von Dünnbettmauerwerken mit Fugenbreiten von 1 bis 3 mm verwendbar sind.

Aufgabe der Erfindung ist es, ein Verfahren nach dem Oberbegriff des Anspruchs 1 zu schaffen, das es ermöglicht, Ziegelformkörper mit Plansteinqualität herzustellen, ohne die Maßhaltigkeit durch mechanische Nachbearbeitung einstellen zu müssen.

Diese Aufgabe wird entsprechend dem kennzeichnenden Teil des Anspruchs 1 dadurch gelöst, daß eine abgelöschte Fraktion einer Braunkohlenflugasche, die beim Brennen vor ihrem Schmelzen quillt, in einer Menge von etwa 30 bis 60 Masse-% zusammen mit gemahlenem, ziegelreichem Bauschutt einer Teilchengröße kleiner etwa 1 mm, der einen Gehalt an getemperten Tonmineralen von wenigstens etwa 20 Masse-% aufweist, in einer Menge von 30 bis 65 Masse-% sowie 5 bis 10 Masse-% Ton zur Herstellung der Preßmasse verwendet werden, wobei das Brennen bei einer Temperatur im Bereich von 1080 bis 1160°C, d.h. unterhalb der Schmelztemperatur der Fraktion der Braunkohlenflugasche, vorgenommen und der Anteil der Fraktion der Braunkohlenflugasche auf den Ziegelanteil des gemahlenen Bauschutts derart abgestimmt wird, daß das Quellen des ersten das Schwinden des zweiten praktisch kompensiert.

Der Ton aus einer natürlichen Lagerstätte wird hierbei verwendet, um beim Trockenpressen der erdfeuchten, etwa 4 bis 8 Masse-% Wasser enthaltenden Preßmasse die Standfestigkeit der Rohlinge infolge seiner Klebwirkung sicherzustellen. Außerdem wirkt der Ton als Sinterinitiator beim späteren Brennen. Da er kein Abfallprodukt darstellt, sondern einen teuren Rohstoff, wird seine Menge möglichst klein gehalten.

Ziegelreicher Bauschutt kann neben Ziegeln Beton, Mörtel, Glas, Natursteine u.dgl. entsprechend der Bauschuttquelle enthalten. Wenn der ziegelreiche Bauschutt nicht von Hause aus wenigstens etwa 40 Masse-%, zweckmäßigerweise wenigstens etwa 50 Masse-% Ziegelgehalt aufweist, kann er mit entsprechend ziegelreichem Material angereichert werden. Ziegel, wie sie üblicherweise in derartigem Bauschutt anfallen, der beim Abbruch von älteren Gebäuden entsteht, enthalten etwa 50 Masse-% Quarzsand und etwa 50 Masse-% getemperte Tonminerale (häufig relativ niedrig gebranntes Material). Dementsprechend enthält die Preßmasse etwa 20 bis 30 Masse-% aus dem Bauschutt stammende Tonminerale. Wenn der Gehalt geringer ist, erfolgt eine Einstellung auf diesen vorgesehenen Gehalt gegebenenfalls durch Beimischen von entsprechend gemahlenem, reinem Ziegelschutt oder geeigneten, beim Mahlen von Bauschutt anfallenden Fraktionen. Das in dem gemahlenen, ziegelreichen Bauschutt vorhandene Ziegelmaterial stellt die Komponente dar, die beim Brennen sintert und hierbei schrumpft.

Der körnige, ziegelreiche Bauschutt besitzt eine maximale Teilchengröße von etwa 1 mm und insbesondere von etwa 0,5 mm.

Die Fraktion einer Braunkohlenflugasche, und zwar einer solchen, die, bevor sie schmilzt, ein Quellen zeigt (nicht alle Braunkohlenflugaschen zeigen ein derartiges Verhalten), wird in einer solchen Menge verwendet, daß deren Quellen das Schrumpfen des sinternden Ziegelmaterial kompensiert wird. Die Fraktion der Braunkohlenflugasche kann eine maximale Teilchengröße bis etwa 500 µm haben, hat jedoch vorzugsweise eine maximale Teilchengröße im Bereich von etwa 200 bis 250 µm. Insbesondere wird eine im wesentlichen von Holz-, Kohle- oder Kokspartikeln befreite Fraktion der Braunkohlenflugasche verwendet, damit es im Innern der Ziegelformkörper während des Brennens nicht zu Reduktionsreaktionen kommt.

Die Fraktion der Braunkohlenflugasche wird zweckmäßigerweise durch Sieben hergestellt.

Die Fraktion der Braunkohlenflugasche wird abgelöscht, so daß kein Freikalkgehalt mehr vorhanden ist. Dies verhindert Treiberscheinungen beim Trocknen der aus der Preßmasse hergestellten Rohlinge.

Die Fraktion der Braunkohlenflugasche (deren Zusammensetzung von der Lagerstätte und den Brenntemperaturen abhängt) zeigt bei etwa 950 bis 1160°C ein vermutlich auf den darin enthaltenen tonmineralischen Gläsern beruhenden Quellverhalten, wobei dieses Quellverhalten außerdem eine Abhängigkeit davon zeigt, ob es sich um Flugasche der ersten, zweiten oder dritten Filterstufe handelt.

Es werden etwa 30 bis 60 Masse-% der Fraktion der Braunkohlenflugasche zusammen mit dem Anteil an gemahlenem Bauschutt derart verwendet, daß diese beiden Komponenten 90 bis 95 Masse-% der Preßmasse (Trockensubstanz) bilden, während der Rest der 100 Masse-% Trockensubstanz entsprechend 5 bis 10 Masse-% Ton ist.

Das Brennen erfolgt unterhalb der Schmelztemperatur der Braunkohlenflugasche, die etwa ≥ 1200°C beträgt, in dem Bereich, in dem sie ihr Quellverhalten zeigt, um das Schwinden des Ziegelgehalt des Bauschutts im wesentlichen zu kompensieren.

Die erdfeuchte Preßmasse, die gegebenenfalls weitere Zusätze wie Flußmittel, Soda etc. enthalten kann, wird durch entsprechendes Mischen der Komponenten und Einstellen des Feuchtigkeitsgehalts hergestellt und auf einer Presse, beispielsweise einer Kalksandsteinpresse, bei Drücken in der Größenordnung von 15 bis 30 N/mm² zu individuellen, eigenstabilen Rohlingen verpreßt. Diese werden dann getrocknet und anschließend gebrannt.

Beispielsweise wird eine aus 45 Masse-% einer abgelöschten Fraktion einer entsprechenden Braunkohlenflugasche mit einer maximalen Teilchengröße von 250 µm, 45 Masse-% gemahlener Bauschutt (maximale Korngröße 1 mm) mit einem Ziegelanteil von 75 Masse-%, der einem Silikatanteil von 33,8 Masse-% entspricht, 10 Masse-% Ton und 5 Masse-% Wasser hergestellte Rohmischung zu Rohlingen entsprechend verpreßt, die Rohlinge getrocknet und anschließend bei 1120°C während 8h zu einem 3,2 kg schweren Stein (Planziegel) gebrannt, wobei eine Trockenschwindung von 0,1% und eine praktisch nicht merkliche Brennschwindung erhalten wird. Derart hergestellte Steine besitzen Plansteinqualität.

Nicht alle Braunkohlenflugaschen zeigen das gewünschte Verhalten, nämlich beim Brennen im dafür vorgesehenen Temperaturbereich zu quellen. Jedoch ist es möglich, diese Braunkohlenflugaschen durch Zusatz eines oder mehrerer entsprechender mineralischer Hilfsstoffe in einer Menge bis etwa 10 Masse-% der Flugasche derart zu modifizieren, daß sie dieses Verhalten zeigen. Bei den mineralischen Hilfsstoffen handelt es sich um Al-arme, kalkreiche und SiO₂-reiche Hilfsstoffe wie Hüttensandmehl oder kalkreiche Stahlwerksschlacke oder kalksilikatreiche, natürliche oder synthetische Gläser. Die Hilfsstoffe wirken im Bereich der Brenntemperatur offenbar derart, daß sich um die Flugascheteilchen ein Reaktionssaum bildet, der in dem vorgesehenen Temperaturintervall der Brenntemperatur das Gefüge der Flugascheteilchen stabiliert, d.h. der Reaktionssaum verkittet nur das Gefüge und verhindert eine Verdichtung hiervon. Somit ergibt sich dann die gewünschte Volumenstabilität.

## Patentansprüche

1. Verfahren zum Herstellen von Ziegelformkörpern durch Herstellen aus einer körniges getempertes tonhaltiges Material, 5 bis 10 Masse-% Ton, Magerungsmittel und Wasser enthaltenden Preßmasse, wobei eine Fraktion einer Braunkohlenflugasche mit einer maximalen Teilchengröße bis etwa 500 µm verwendet und eine erdfeuchte Preßmasse erzeugt wird, die bei Drücken in der Größenordnung von 15 bis 30 N/mm² zu individuellen, eigenstabilen Rohlingen, insbesondere auf einer Kalksandsteinpresse, verpreßt wird, die getrocknet und gebrannt werden, dadurch **gekennzeichnet**, daß eine abgelöschte Fraktion einer Braunkohlenflugasche, die beim Brennen vor ihrem Schmelzen quillt, in einer Menge von etwa 30 bis 60 Masse-% zusammen mit gemahlenem, ziegelreichem Bauschutt einer maximalen Teilchengröße von etwa 1 mm, der einen Gehalt an getemperten Tonmineralen von wenigstens etwa 20 Masse-% aufweist, in einer Menge von 30 bis 65 Masse-% sowie der Ton zur Herstellung der Preßmasse verwendet werden, wobei das Brennen bei einer Temperatur im Bereich von etwa 1080 bis 1160°C, d.h. unterhalb der Schmelztemperatur der Fraktion der Braunkohlenflugasche, vorgenommen und der Anteil der Fraktion der Braunkohlenflugasche auf den Ziegelanteil des gemahlenen Bauschutts derart abgestimmt wird, daß das Quellen des ersten das Schwinden des zweiten praktisch kompensiert.

2. Verfahren nach Anspruch 1, dadurch gekennzeichnet, daß das Brennen bei einer Temperatur von etwa 1100 bis 1130°C vorgenommen wird.

3. Verfahren nach Anspruch 1 oder 2, dadurch gekennzeichnet, daß eine Fraktion der Braunkohlenflugasche mit einer maximalen Teilchengröße von etwa 200 bis 250 µm verwendet wird.

4. Verfahren nach einem der Ansprüche 1 bis 3, dadurch gekennzeichnet, daß eine im wesentlichen von Holz-, Kohle- oder Kokspartikeln befreite Fraktion der Braunkohlenflugasche verwendet wird.

5. Verfahren nach einem der Ansprüche 1 bis 4, dadurch gekennzeichnet, daß gemahlener Bauschutt mit einer maximalen Korngröße von etwa 0,5 mm verwendet wird.

6. Verfahren nach einem der Ansprüche 1 bis 5, dadurch gekennzeichnet, daß gemahlener Bauschutt mit einem Gehalt an getemperten Tonmineralen von wenigstens etwa 25 Masse-% verwendet wird.

7. Verfahren nach einem der Ansprüche 1 bis 6, dadurch gekennzeichnet, daß ein Tonmineralanteil aus dem körnigen Bauschutt in einer Menge von etwa 15 bis 35 Masse-% der Preßmasse (gerechnet als Trockensubstanz) verwendet wird.

8. Verfahren nach einem der Ansprüche 1 bis 7, dadurch gekennzeichnet, daß der Tonmineralanteil des körnigen Bauschutts durch Zugabe von körnigem Material mit erhöhten Ziegelgehalt auf mindestens etwa 20 bis 25 Masse-% eingestellt wird.

9. Verfahren nach einem der Ansprüche 1 bis 8, dadurch gekennzeichnet, daß einer im Brenntemperaturintervall schwindenden Braunkohlenflugasche bis etwa 10 Masse-% eines mineralischen, im Brenntemperaturintervall ein Quellen bewirkenden Hilfsstoffs oder Hilfsstoffgemischs zugesetzt wird.

10. Verfahren nach Anspruch 9, dadurch gekennzeichnet, daß mindestens ein Al-armer, kalkreicher und/oder SiO₂-reicher Hilfsstoff zugesetzt wird.

11. Verfahren nach Anspruch 10, dadurch gekennzeichnet, daß als Hilfsstoff Hüttensandmehl und/oder kalkreiche Stahlwerksschlacke und/oder kalksilikatreiches Glasmehl zugesetzt wird.

## Claims

1. Process for producing bricks by producing from a granular, tempered material containing clay, a moulded article containing 5 to 10% by mass clay, leaning material and water, in which case a fraction of a lignite fly ash with a maximum particle size of up to approximately 500 µm is used and a moist moulded article is produced, which at pressures of the order of 15 to 30 N/mm² is compressed to form individual, inherently stable unfinished products, in particular on a sand-lime brick press, which are dried and fired, characterised in that a quenched fraction of a lignite fly ash, which swells at the time of firing before it melts, in a quantity of approximately 30 to 60% by mass together with ground rubble rich in brick, with a maximum particle size of approximately 1 mm, which has a content of tempered clay minerals of at least approximately 20% by mass, in a quantity of 30 to 65% by mass as well as the clay are used for the production of the moulded article, the firing being carried out at a temperature in the range of approximately 1080 to 1160°C, i.e. below the melting temperature of the fraction of lignite fly ash, and the proportion of the fraction of lignite fly ash being adjusted to the proportion of brick in the ground rubble so that the swelling of the first virtually compensates for the shrinkage of the second.

2. Process according to Claim 1, characterised in that the firing is carried out at a temperature of approximately 1100 to 1130°C.

3. Process according to Claim 1 or 2, characterised in that a fraction of the lignite fly ash with a maximum particle size of approximately 200 to 250 µm is used.

4. Process according to one of Claims 1 to 3, characterised in that a fraction of the lignite fly ash essentially free from wood, coal or coke particles is used.

5. Process according to one of Claims 1 to 4, characterised in that ground rubble with a maximum particle size of approximately 0.5 mm is used.

6. Process according to one of Claims 1 to 5, characterised in that ground rubble with a content of tempered clay minerals of at least approximately 25% by mass is used.

7. Process according to one of Claims 1 to 6, characterised in that a clay mineral component of the granular rubble in a quantity of approximately 15 to 35% by mass of the moulded article (calculated as dry substance) is used.

8. Process according to one of Claims 1 to 7, characterised in that the clay mineral component of the granular rubble is adjusted by the addition of granular material with an increased brick content to at least approximately 20 to 25% by mass.

9. Process according to one of Claims 1 to 8, characterised in that up to approximately 10% by mass of a mineral auxiliary agent or auxiliary agent mixture causing swelling at the firing temperature range is added to a lignite fly ash shrinking in the firing temperature range.

10. Process according to Claim 9, characterised in that at least one auxiliary agent is added, which is low in Al, rich in lime and/or rich in SiO₂.

11. Process according to Claim 10, characterised in that foundry powdered sand and/or lime-rich steelworks' slag and/or powdered glass rich in calc-silicate is added as the auxiliary agent.

## Revendications

1. Procédé de fabrication de briques moulées, par la réalisation, à partir d'un matériau granuleux, malléable, argileux, d'une masse de pressage contenant 5 à 10 % en poids d'argile, un agent dégraissant et de l'eau, avec utilisation d'une fraction d'une suie de lignite dont la granulométrie maximale est d'environ 500 µm, la masse de pressage réalisée, humide comme de la terre, étant comprimée, à des pressions de l'ordre de grandeur de 15 à 30 N/mm², pour former des briques crues individuelles, à stabilité propre, notamment au moyen d'une presse pour briques silico-calcaires, qui seront ensuite séchées et cuites, caractérisé en ce qu'on utilise une fraction éteinte d'une suie de lignite qui gonfle, lors de la cuisson et avant sa fusion, en une quantité d'environ 30 à 60 % en poids, en association avec des déchets de chantier moulus, riches en matériau à briques, d'une granulométrie maximale d'environ 1 mm, déchets qui présentent une teneur d'au moins 20 % en poids environ de minéraux argileux malléables et dont la quantité est comprise entre 30 et 65 % en poids, ainsi que l'argile nécessaire à la fabrication de la masse de pressage, la cuisson s'effectuant à une température entre environ 1080 et 1160°C, c'est-à-dire inférieure à la température de fusion de la fraction de la suie de lignite, la proportion de cette fraction de suie de lignite et la proportion de matériau à briques présente dans les déchets de chantier moulus étant ajustées de telle manière que le gonflement de la suie compense pratiquement la diminution du volume desdits déchets moulus.

2. Procédé selon la revendication 1, caractérisé en ce que la cuisson est effectuée à une température d'environ 1100 à 1130°C.

3. Procédé selon la revendication 1 ou 2, caractérisé en ce qu'une fraction de la suie de lignite est utilisée avec une granulométrie maximale d'environ 200 à 250 µm.

4. Procédé selon l'une des revendications 1 à 3, caractérisé en ce que l'on utilise une fraction de suie de lignite sensiblement débarrassée de toutes particules de bois, de charbon ou de coke.

5. Procédé selon l'une des revendications 1 à 4, caractérisé en ce que les déchets de chantier moulus utilisés ont une granulométrie maximale d'environ 0,5 mm.

6. Procédé selon l'une des revendications 1 à 5, caractérisé en ce que les déchets de chantier moulus utilisés ont une teneur en minéraux argileux malléables d'au moins 25 % en poids.

7. Procédé selon l'une des revendications 1 à 6, caractérisé en ce qu'on utilise une proportion en minéraux argileux provenant des déchets de chantier granuleux, en une quantité égale à environ 15 à 35 % en poids de la masse de pressage (calculée sous la forme de substance sèche).

8. Procédé selon l'une des revendications 1 à 7, caractérisé en ce que la proportion de minéraux argileux provenant des déchets de chantier granuleux est ajustée à une quantité égale à environ 20 à 25 % en poids, par l'addition de matériaux granuleux à teneur plus élevée en déchets de briques.

9. Procédé selon l'une des revendications 1 à 8, caractérisé en ce que, a une suie de lignite dont la quantité se réduit pendant l'intervalle thermique de la cuisson, on ajoute une quantité allant jusqu'à environ 10 % en poids d'un additif minéral, ou un mélange d'additifs minéraux, provoquant un gonflement pendant cet intervalle thermique.

10. Procédé selon la revendication 9, caractérisé en ce que l'on ajoute au moins un additif pauvre en Al, riche en chaux et/ou riche en SiO₂.

11. Procédé selon la revendication 10, caractérisé en ce que l'on ajoute à titre d'additif de la poussière de sable de fonderie et/ou du mâchefer d'aciérie riche en chaux et/ou de la poudre de verre riche en silicate de chaux.
